Europäisches Patentamt

(19) European Patent Office

Office européen des brevets

(11) Veröffentlichungsnummer: **0 005 520**
**B1**

(12) # EUROPÄISCHE PATENTSCHRIFT

(45) Veröffentlichungstag der Patentschrift:
**20.10.82**

(51) Int. Cl.³: **C 09 D 7/00, C 08 K 5/10**

(21) Anmeldenummer: **79101449.1**

(22) Anmeldetag: **11.05.79**

(54) **Mittel zur Antischmutzausrüstung von Lacken, Verfahren zur Herstellung derselben und Lacke mit schmutzabweisenden Eigenschaften.**

(30) Priorität: **17.05.78 DE 2821495**

(43) Veröffentlichungstag der Anmeldung:
**28.11.79 Patentblatt 79/24**

(45) Bekanntmachung des Hinweises auf die Patenterteilung:
**20.10.82 Patentblatt 82/42**

(84) Benannte Vertragsstaaten:
**AT BE CH FR GB IT LU NL SE**

(56) Entgegenhaltungen:
**DE-A-2 628 776**
**FR-A-2 086 904**
**GB-A-1 155 567**
**GB-A-1 157 320**

(73) Patentinhaber: **Battelle-Institut e.V., Am Römerhof 35,
D-6000 Frankfurt/Main 90 (DE)**

(72) Erfinder: **Deibig, Heinrich, Dr., Priessnitzstrasse 13,
D-6000 Frankfurt (Main) (DE)**
Erfinder: **Reiner, Roland, Dr., Gehspitz 11,
D-6236 Eschborn (DE)**
Erfinder: **Wollmann, Klaus, Bahnhofstrasse 33,
D-6250 Limburg (DE)**

(74) Vertreter: **Blum, Klaus-Dieter, Dipl.-Ing., Am
Römerhof 35, D-6000 Frankfurt/Main 90 (DE)**

Mittel zur Antischmutzausrüstung von Lacken, Verfahren zur Herstellung derselben und Lacke mit schmutzabweisenden Eigenschaften

Die Erfindung betrifft Mittel zur Antischmutzausrüstung von Lacken auf der Basis von Verbindungen mit hochfluorierten oder perfluorierten Alkylgruppen, ausgenommen Fluoralkylphthalate, Verfahren zu deren Herstellung sowie Lacke mit schmutzabweisenden Eigenschaften.

Besonders an den Oberflächen von Seidenglanz- und Mattlacken kann Schmutz sehr fest haften und nur durch eine intensive mechanische Reinigung entfernt werden. Die schmutzabweisende Wirkung von hochfluorierten bzw. perfluorierten Carbonsäureverbindungen, wie Ester oder Amine, in Lacken, Farben oder dergleichen wurde bereits im GB-A-1 157 320 und DE-A-2 628 776 beschrieben. Ferner sind aus FR-A-2 086 904 Polyfluoraminverbindungen als oberflächenaktive Mittel bekannt. Solche Verbindungen zeigen jedoch keine genügende Lackverträglichkeit und ihre Verwendung in Lacken führt zu einem Ausschwitzen des Additivs. Filmbildende Zusammensetzungen, die durch Ester mit einer fluorierten Kette aus mindestens drei C-Atomen modifiziert sind, werden in GB-A-1 157 320 beschrieben und es wird angegeben, dass sie eine verbesserte Korrosionsbeständigkeit und Wasser, Öl und Fett abweisende Eigenschaften besitzen. Die Verwendung von Fluoralkylphthalaten als Additive für Polyesterlacke bzw. Alkydharze erfolgt jedoch rein zufällig, ohne dass die Lackverträglichkeit erkannt wird.

Die Aufgabe der Erfindung ist daher die Auffindung eines Mittels, das dem lackierten Gegenstand unter Vermeidung obengenannter Nachteile schmutzabweisende Eigenschaften verleihen kann. Die schmutzabweisende Wirkung sollte sich insbesondere auf hydrophilen, mineralischen Schmutz erstrecken. Diese Mittel sollten ferner bei allen Arten von Lacken verwendet werden können, z.B. bei pigmentierten Lacken oder Klarlacken, bei physikalisch trocknenden oder durch chemische Reaktion bei Raumtemperatur trocknenden Lacken oder bei Einbrennlacken.

Es hat sich nun gezeigt, dass sich diese Aufgabe in technisch fortschrittlicher Weise lösen lässt, wenn gemäss vorliegender Erfindung der Teil der Verbindung, der keine hoch- oder perfluorierte Gruppe enthält, einer Grundeinheit des Lackbindemittels gleicht. Die hochfluorierten Alkylgruppen enthalten vorteilhafterweise 5 oder mehr C-Atome, von denen mindestens 3 perfluoriert sind.

Die erfindungsgemässen Mittel werden hergestellt, indem man eine das Lackbindemittel bildende Komponente oder eine dieser Komponente analoge Verbindung oder ein Umsetzungsprodukt der das Lackbindemittel bildenden Komponenten oder analogen Verbindungen mit der stöchiometrischen Menge einer reaktionsfähigen, hochfluorierten oder perfluorierten Alkylverbindung in an sich bekannter Weise umsetzt. Als hochfluorierte Alkylverbindungen können z.B. Carbonsäuren, Alkohole, Aldehyde, Amine oder Halogenide verwendet werden.

Die erfindungsgemässen Mittel zur Antischmutzausrüstung eignen sich für alle Kunstharze, z.B. Polyurethanharze, Acrylharze und Phenolharze. Da die Additive ausser den hochfluorierten oder perfluorierten Alkylgruppen noch Gruppen enthalten, die auch im Lackbindemittel vorhanden sind, wird ein Ausschwitzen desselben verhindert und eine zufriedenstellende Lackverträglichkeit erzielt.

Erfindungsgemäss eignet sich für Polyurethanharze z.B. ein niedermolekulares Perfluoralkylgruppen enthaltendes Urethan. Solche Additive können durch Umsetzung eines Mono- oder Diisocyanats, das der Isocyanatkomponente des Lackbindemittels entspricht oder dieser analog ist, mit 1 oder 2 Mol eines perfluorierten 1H, 1H- oder 1H, 1H, 2H, 2H-Perfluoralkanols, z.B. 1H, 1H, 2H, 2H-Perfluorhexanols oder eines anderen mindestens 3 perfluorierte C-Atome enthaltenden Carbinols, hergestellt werden.

Zur Herstellung eines geeigneten Additivs für z.B. Harnstoff-Formaldehyd-Melamin-Harze kann das Umsetzungsprodukt aus Melamin, Formaldehyd und Harnstoff methyloliert und eine entsprechende Anzahl von OH-Gruppen mit 1H, 1H- oder 1H, 1H, 2H, 2H-Perfluoralkanolen veräthert werden.

Bei Chlorkautschuk, Cyclokautschuk, Polyvinylacetat und chloriertem Polypropylen können die entsprechenden Methylgruppen ersetzt werden, wodurch geeignete Additive entstehen. Bei Acrylharzen kommen als schmutzabweisende Mittel die hochfluorierten oder perfluorierten Alkylester der Isobuttersäure bzw. der Trimethylessigsäure in Frage. Anstelle der reinen hochfluorierten oder perfluorierten Umsetzungsreagenzien können auch Gemische verschiedener Molekülgrösse eingesetzt werden.

Die erfindungsgemässen Mittel werden dem Lack in Mengen von 0,1 bis 50 Gew.-%, vorzugsweise 1 bis 20 Gew.-%, bezogen auf das Gewicht des Trockenlacks, zugesetzt. Da sie in feiner Verteilung vorliegen müssen, empfiehlt es sich, die Additive während des Mischvorgangs der Lackbestandteile zuzugeben.

Die nachfolgenden Beispiele erläutern die Erfindung:

Beispiel 1

1 Mol Hexamethylendiisocyanat und 2 Mol 1H, 1H, 2H, 2H-Perfluoroctanol werden unter Erhitzen umgesetzt. Das Reaktionsprodukt wird in an sich bekannter Weise isoliert und einem Polyurethan-Mattlack in einer Menge von 10 Gew.-%, bezogen auf das Gewicht des Trockenlacks, zugesetzt. Die Mischung wird in einer Kugelmühle homogenisiert.

Die Beurteilung der Antischmutzwirkung erfolgt an einer lackierten Fläche, die mit einem Tonschlicker bestrichen wird, so dass sich nach dem Trocknen des Schlickers eine ca. 0,5 mm dicke Tonschicht auf der Fläche befindet. Zu diesem Zweck wurde der additivhaltige Polyurethanlack auf ein grundiertes Stahlblech gespritzt. Nach dem Trocknen wurde das lackierte Blech mit Tonschlicker bestrichen. Der Ton löste sich während des Trocknens ohne Rückstand von dem lackierten Blech ab. Bei einem gleichzeitig lackierten Blech, bei dem der Lack kein Additiv enthielt, haftete der Ton nach dem Trocknen noch sehr fest auf der Lackierung.

Beispiel 2

1 Mol Butylisocyanat und 1 Mol 1H, 1H-Perfluordecanol werden umgesetzt und das Reaktionsprodukt wird einem Polyurethan-Klarlack in einer Menge von 7 Gew.-%, bezogen auf das Gewicht des Trockenlacks, zugesetzt. Mit dem additivhaltigen Lack wurde eine Betonfläche bestrichen. Nach dem Trocknen des Lacks wurde der imprägnierte Beton mit Tonschlicker bestrichen. Während des Trocknens des Schlickers hob sich der Ton völlig von der lackierten Fläche ab. Der Ton haftete bei einer Vergleichslackierung ohne Additiv-Zusatz nach dem Trocknen sehr fest.

Beispiel 3

Das Umsetzungsprodukt aus 1 Mol Maleinsäureanhydrid und 2 Mol 1H, 1H, 2H, 2H-Perfluoroctanol wird einem kurzöligen, lufttrocknenden Alkydharzlack in einer Menge von 12 Gew.-% zugefügt. Mit dem additivhaltigen Lack wurden dann Holzflächen bestrichen. Der Ton löste sich während des Trocknens ab. Lediglich ein leichter Tonschleier blieb zurück. Eine Vergleichsprobe ohne Additive ergab, dass der Ton nach dem Trocknen sehr fest auf dem Lack haftete.

Beispiele 4 bis 20

Mit den in der nachfolgenden Tabelle aufgeführten lackbindemittelanalogen und Perfluoralkylgruppen enthaltenden Ausgangsprodukten werden durch bekannte, einfache chemische Umsetzungen wie Veresterung, Verätherung, Additionsreaktionen, schmutzabweisende Additive für die ebenfalls in der Tabelle aufgeführten Lackbindemittel hergestellt. Additivhaltige Lacke zeigten wie in den Beispielen 1 bis 3 gute bis sehr gute schmutzabweisende Eigenschaften.

Tabelle
Ausgangsprodukte zur Herstellung von schmutzabweisenden Additiven für Lackbindemittel

| Beispiel | lackbindemittelanaloges Ausgangsprodukt | perfluoralkylgruppenent- haltendes Ausgangsprodukt | äquivalentes Lackbindemittel |
|---|---|---|---|
| 4 | Isopropanol | Perfluormonocarbonsäuren | Polyvinylester |
| 5 | 2,4-Pentadiol | Perfluormonocarbonsäuren | Polyvinylester |
| 6 | Isopropanol | Perfluoralkylalkohole | Polyvinyläther |
| 7 | 2,4-Pentandiol | Perfluoralkylalkohole | Polyvinyläther |
| 8 | Isobuttersäure | Perfluoralkylalkohole | Polyacrylate |
| 9 | Trimethylessigsäure | Perfluoralkylalkohole | Polymethacrylate |
| 10 | 2,4-Pentadiol | Perfluoralkylaldehyde | Polyacetale |
| 11 | Dimethylolharnstoff | Perfluoralkylalkohole | Harnstoffharze |
| 12 | Tetramethylharnstoff | Perfluoralkylalkohole | Harnstoffharze |
| 13 | Trimethylolmelamin | Perfluoralkylalkohole | Melaminharze |
| 14 | Hexamethylolmelamin | Perfluoralkylalkohole | Melaminharze |
| 15 | Phenolresole | Perfluoralkylalkohole | Phenolharze |
| 16 | Pyromellithsäure | Perfluoralkylalkohole | Alkydharze |
| 17 | Bisphenol A-Diglycidäther | Perfluormonocarbonsäuren | Epoxyharze |
| 18 | Bisphenol A-Diglycidäther | Perfluoralkylamine | Epoxyharze |
| 19 | Bisphenol A | Perfluoralkyläthyljodide | Polycarbonate |
| 20 | Abietinsäure | Perfluoralkylalkohole | Colophoniumesterharze |

**Patentansprüche**

1. Mittel zur Antischmutzausrüstung von Lacken auf der Basis von niedermolekularen, mit dem Lackbindemittel nicht reagierbaren Verbindungen mit hochfluorierten oder perfluorierten Alkylgruppen, ausgenommen Fluoralkylphthalate, dadurch gekennzeichnet, dass der Teil der Verbindung, der keine hoch- oder perfluorierte Gruppen enthält, einer Grundeinheit des Lackbindemittels gleicht.

2. Mittel nach Anspruch 1, dadurch gekennzeichnet, dass die hochfluorierte Alkylgruppe 5 oder mehr C-Atome enthält, von denen mindestens 3 C-Atome perfluoriert sind.

3. Verfahren zur Herstellung der Mittel nach Anspruch 1 oder 2, dadurch gekennzeichnet, dass man eine das Lackbindemittel bildende Komponente, eine dieser Komponente analoge Verbindung oder ein Umsetzungsprodukt der das Lackbindemittel bildenden Komponenten oder analogen Verbindungen mit der stöchiometrischen Menge einer reaktionsfähigen hochfluorierten oder perfluorierten Alkylverbindung in an sich bekannter Weise umsetzt.

4. Lacke mit schmutzabweisenden Eigenschaften, dadurch gekennzeichnet, dass sie in feiner Verteilung 0,1 bis 50 Gew.-%, vorzugsweise 1 bis 20 Gew.-%, bezogen auf das Gewicht des Trockenlacks, ein Mittel gemäss Patentansprüchen 1 bis 3 enthalten.

## Claims

1. Anti-soiling composition for lacquers on the basis of low molecular compounds non-reactive with lacquerbinders, having highly fluorinated or perfluorinated alkyl groups with the exception of fluoro alkyl phtahlates, characterized in that, the part of the compound having no higly fluorinated or per fluorinated groups is equal to a fundamental unit of the lacquer-binder.

2. Composition according to claim 1 wherein the highly fluorinated alkyl group contains 5 or more C-atoms, at least 3 C-atoms of which being perfluorinated.

3. Method for the production of compositions according to claim 1 or 2, characterized in that, a component forming the lacquer-binder, a compound being analogous to this component or a reaction product of the components forming the lacquer-binder or analogous compounds are reacted in the known manner with a stoichiometric amount of a reactive, higly fluorinated or perfluorinated alkyl compound.

4. Lacquers having dirt repelling properties characterized in that they contain finely distributed 0,1 to 50 weight per cent, based on the weight of the dry lacquer, a composition according to claim 1 to 3.

## Revendications

1. Agent anti-salissures pour vernis, à base de composés à faible poids moléculaire comportant des groupes hautement fluorés ou perfluorés, exception faite des fluoralcoylphtalates, qui ne réagissent pas avec les liants des vernis, agent caractérisé en ce que la partie de la combinaison qui ne contient pas de groupes hautement fluorés ou perfluorés est semblable à une unité de base du systéme constituant le liant.

2. Agent suivant la revendication 1, caractérisé en ce que le groupe alcoyle hautement fluoré contient au moins cinq atomes de C, dont au moins trois sont perfluorés.

3. Procédé pour la fabrication de l'agent suivant l'une des revendications 1 et 2, caractérisé en ce que l'on fait réagir, d'une façon connue en soi, un des composants formant le systéme liant, un composé analogue à ce composant, ou un produit de la réaction des composants formant le système liant ou des composés analogues avec la quantité stoechiométrique d'un composé alcoyle réactif hautement fluoré ou perfluoré.

4. Vernis ayant des propriétés anti-salissures, caractérisés en ce qu'ils contiennent, à l'état finement divisé, 0,1 à 50% en poids, de préférence 1 à 20% en poids, calculé sur le poids de vernis sec, d'un agent suivant l'une quelconque des revendications 1 à 3.